# FASCICULE DE BREVET EUROPEEN

(11) **EP 2 867 054 B1**
(45) Date de publication et mention de la délivrance du brevet: **02.05.2018**
(21) Numéro de dépôt: 13731808.5
(22) Date de dépôt: 27.06.2013
(51) Int. Cl.: B60K 37/02, G01D 11/28, G01D 13/22, H05K 7/02

(54) **TABLEAU DE BORD ET METHODE D'ASSEMBLAGE D'UN TABLEAU DE BORD**
ARMATURENBRETT UND VERFAHREN ZUR MONTAGE EINES ARMATURENBRETTS
DASHBOARD AND METHOD FOR ASSEMBLING A DASHBOARD

(30) Priorité: 27.06.2012 FR 1201816
(43) Date de publication de la demande: 06.05.2015
(73) Titulaire: Johnson Controls Automotive Electronics SAS, 95892 Cergy-Pontoise Cedex (FR)
(72) Inventeur: BOX, Benoit, F-95290 L'Isle Adam (FR); PREAULT, Jean-Marc, F-75018 Paris (FR)
(74) Mandataire: Schwöbel, Thilo K.
(86) Numéro de dépôt international: PCT/EP2013/063485
(87) Numéro de publication internationale: WO 2014/001440

(56) Documents cités:
- EP-A1- 0 676 307
- DE-A1- 4 230 417
- DE-A1- 19 941 352
- FR-A1- 2 626 536

## Description

La présente invention concerne, d'une part, un tableau de bord, notamment pour véhicule automobile, et d'autre part, une méthode d'assemblage d'un tableau de bord pour véhicules automobile.
Plus précisément, la présente invention concerne de réaliser un tableau de bord de telle manière que l'assemblage du tableau de bord puisse se faire aisément et rapidement.
Dans l'état connu de la technique, des tableaux de bord pour véhicule automobile sont connus comprenant une boîte à lumière, un appareil indicateur à aiguille et une carte imprimée électronique, l'appareil indicateur à aiguille étant entrainé en rotation autour d'un axe de rotation par un élément moteur.
De tels tableaux de bord comportant un appareil indicateur à aiguille sont connus par exemple pour afficher une valeur comme la vitesse ou d'autres grandeurs qui intéressent un conducteur d'un véhicule.
Il est également connu de prévoir des tableaux de bord ayant, en outre de l'appareils indicateur à appareil indicateur à aiguille, un autre appareil indicateur à aiguille.
Pour réaliser une telle configuration d'un tableau de bord, notamment avec des plans des deux appareils indicateur à aiguille en inclinaison l'un par rapport à l'autre, il a été nécessaire de prévoir deux parties de carte imprimée électronique, notamment également inclinées l'une par rapport à l'autre.
Selon l'art antérieur, une telle configuration requiert un effort, et également des coûts considérables.

Un tableau de bord pour véhicules automobiles selon le préambule de la revendication 1 et une méthode d'assemblage d'un tableau de bord pour véhicules automobiles selon le préambule de la revendication 3 sont connus du document FR 2 626 536 A1.

La présente invention à notamment pour but de palier aux inconvénients de l'art connu, et notamment ceux cités ci-dessus et à également pour but de proposer un tableau de bord de façon à rendre l'assemblage du tableau de bord plus simple et moins couteux.
Suivant l'invention, ce but est atteint par un tableau de bord pour véhicules automobiles, comprenant
-- une boîte à lumière
-- un appareil indicateur à aiguille, et
-- une carte imprimée électronique,
l'appareil indicateur à aiguille étant entrainé en rotation, par un élément moteur, autour d'un axe de rotation,
-- que l'élément moteur est attaché à la boîte à lumière indépendamment d'un attachement à la carte imprimée électronique,
-- que la boîte à lumière comprend des surfaces électriquement conductrices, et
-- que l'élément moteur est relié, par l'intermédiaire d'au moins une des surfaces électriquement conductrices, à la carte imprimée électronique.
De par une telle réalisation du tableau de bord, il est avantageusement possible de réaliser l'assemblage du tableau de bord de manière plus simple et moins couteux. Selon l'invention la boîte à lumière est reliée de manière électriquement conductrice à la carte imprimée électronique par l'intermédiaire d'un élément de brasage.
De par une telle réalisation du tableau de bord inventif, il est avantageusement possible de réaliser également une plus grande stabilité de la (seule) carte imprimée électronique, car celle-ci peut être réalisée plus grande. En outre, selon la présente invention, il est prévu que l'élément moteur est relié de manière électriquement conducteur à la boîte à lumière par l'intermédiaire d'un autre élément de brasage.
De par une telle réalisation du tableau de bord, il est avantageusement possible de réaliser une plus grande facilité de montage et d'assemblage du tableau de bord.
Selon encore un autre mode de réalisation préféré du tableau de bord selon la présente invention, il est prévu que le tableau de bord comprend également un autre appareil indicateur à aiguille et un autre élément moteur, l'autre élément monteur étant directement attaché à la carte imprimée électronique.
De par une telle réalisation du tableau de bord, il est avantageusement possible de réaliser une plus grande facilité de montage et d'assemblage du tableau de bord, notamment avec l'appareil indicateur à aiguille et l'autre appareil indicateur à aiguille étant inclinés l'un par rapport à l'autre.

Un autre objet de la présente invention concerne une méthode d'assemblage d'un tableau de bord pour véhicules automobiles selon la revendication 3. De par une telle réalisation de l'assemblage du tableau de bord, il est avantageusement possible d'assembler le tableau de bord de manière plus simple et, par conséquent, de manière impliquant des coûts réduits.
Le tableau de bord selon la présente invention et la méthode d'assemblage d'un tableau de bord selon la présente invention ont, notamment, l'avantage de faciliter l'assemblage du tableau de bord.
D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

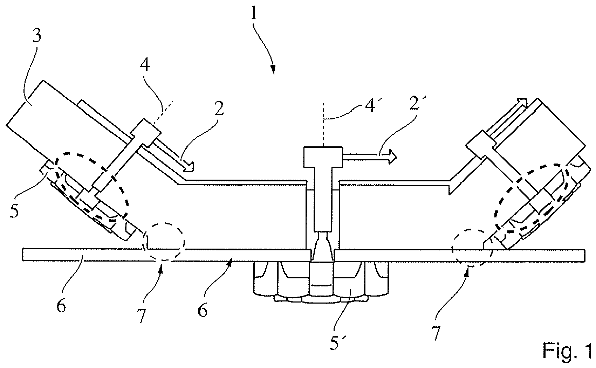

la figure 1 est une vue schématique de section d'un tableau de bord selon la présente invention.

### DESCRIPTION DES DESSINS

La figure 1 montre schématiquement une section d'un tableau de bord 1 selon la présente invention.

Le tableau de bord 1 comprend une carte imprimée électronique 6 et une boîte à lumière 3. La boîte à lumière 3 est attachée par rapport à la carte imprimée électronique 6. Dans une portion de la boîte à lumière 3, la boîte à lumière 3 est coudé par rapport au plan d'extension principale de la carte imprimée électronique 6. Dans la portion coudée de la boîte à lumière 3, un appareil indicateur à aiguille 2, ayant un axe de rotation 4, est prévu. L'appareil indicateur à aiguille 2 est entraîné en rotation autour de l'axe de rotation par l'intermédiaire d'un élément moteur 5.

Selon la présente invention, l'élément moteur 5 est attaché mécaniquement et électriquement avec la boîte à lumière 3. La boîte à lumière 3 comprend sur sa surface des portions de surface électriquement conductrices à l'aide desquelles l'élément moteur 5 est relié électriquement à la boîte à lumière 3. La boîte à lumière 3 est reliée de manière électriquement conductrice à la carte imprimée électronique 6 par l'intermédiaire d'un élément de brasage 7 et également par l'intermédiaire des surface électriquement conductrices. Egalement, l'élément moteur 5 est relié de manière électriquement conductrice à la boîte à lumière 3 par l'intermédiaire d'un autre élément de brasage 8.

De préférence, le tableau de bord 1 comprend également un autre appareil indicateur à aiguille 2' et un autre élément moteur 5',
-- l'autre élément monteur 5' étant directement attaché à la carte imprimée électronique 6, et
-- l'autre élément monteur 5' entrainant l'autre appareil indicateur à aiguille 2' en rotation autour d'un autre axe de rotation 4'.

Ainsi, il est facilement possible, selon la présente invention, de pouvoir réaliser deux, voir trois ou plusieurs appareils indicateur à aiguille de manière inclinée en utilisant seulement une seule carte imprimée électronique 6.

Les surfaces électriquement conductrices qui se trouvent sur au moins une partie de la surface de la boîte à lumière 3 sont notamment des éléments en métal déposé sur la surface du matériau de la boîte à lumière 3, notamment un matériau en matière plastique comme, par exemple, l'acrylonitrile butadiène styrène (aussi abrégé « ABS »). Selon d'autres modes de réalisation de la présente invention, il peut être prévu d'attacher, notamment par collage, des parties en métal sur la surface de la boîte à lumière 3.

### Liste des signes de référence

- 1: tableau de bord
- 2: appareil indicateur à aiguille
- 2': autre appareil indicateur à aiguille
- 3: boîte à lumière
- 4: axe de rotation
- 4': autre axe de rotation
- 5: élément moteur
- 5': autre élément moteur
- 6: carte imprimée électronique
- 7: élément de brasage
- 8: autre élément de brasage

## Revendications

1. Tableau de bord (1) pour véhicules automobiles, comprenant
-- une boîte à lumière (3)
-- un appareil indicateur à aiguille (2), et
-- une carte imprimée électronique (6),
l'appareil indicateur à aiguille (2) étant entrainé en rotation, par un élément moteur (5), autour d'un axe de rotation (4),
-- l'élément moteur (5) étant attaché à la boîte à lumière (3) indépendamment d'un attachement à la carte imprimée électronique (6),
-- la boîte à lumière (3) comprenant des surfaces électriquement conductrices, et
-- l'élément moteur (5) étant relié, par l'intermédiaire d'au moins une des surfaces électriquement conductrices, à la carte imprimée électronique (6),
**caractérisé en ce que** la boîte à lumière (3) est reliée de manière électriquement conductrice à la carte imprimée électronique (6) par l'intermédiaire d'un élément de brasage (7) et
**que** l'élément moteur (5) est relié de manière électriquement conducteur à la boîte à lumière (3) par l'intermédiaire d'un autre élément de brasage (8).

2. Tableau de bord (1) selon la revendication 1, **caractérisé en ce que** le tableau de bord (1) comprend également un autre appareil indicateur à aiguille (2') et un autre élément moteur (5'), l'autre élément monteur (5') étant directement attaché à la carte imprimée électronique (6).

3. Méthode d'assemblage d'un tableau de bord pour véhicules automobiles, le tableau de bord comprenant
-- une boîte à lumière (3)
-- un appareil indicateur à aiguille (2), et
-- une carte imprimée (6),
l'appareil indicateur à aiguille (2) étant entrainé en rotation, par un élément moteur (5), autour d'un axe de rotation (4),
-- l'élément moteur (5) étant attaché à la boîte à lumière (3) indépendamment d'un attachement à la carte imprimée électronique (6),
-- que la boîte à lumière (3) comprenant des surfaces électriquement conductrices, et
-- l'élément moteur (5) étant relié, par l'intermédiaire d'au moins une des surfaces électriquement conductrices, à la carte imprimée électronique (6), la boîte à lumière (3) étant reliée de manière électriquement conductrice à la carte imprimée électronique (6) par l'intermédiaire d'un élément de brasage (7) et l'élément moteur (5) étant relié de manière électriquement conducteur à la boîte à lumière (3) par l'intermédiaire d'un autre élément de brasage (8), **caractérisée en ce que** la méthode d'assemblage comprend une étape pendant laquelle l'appareil indicateur à aiguille (2) est attaché à la boîte à lumière (3) et une étape pendant laquelle la boîte à lumière (3) est attachée à la carte imprimée électronique (6).

## Patentansprüche

1. Armaturenbrett (1) für Kraftfahrzeuge, welches umfasst:
-- einen Leuchtkasten (3),
-- eine Zeigeranzeigevorrichtung (2) und
-- eine elektronische Leiterplatte (6),
wobei die Zeigeranzeigevorrichtung (2) von einem Motorelement (5) um eine Drehachse (4) drehend angetrieben wird,
-- wobei das Motorelement (5) an dem Leuchtkasten (3) unabhängig von einer Befestigung an der elektronischen Leiterplatte (6) befestigt ist,
-- wobei der Leuchtkasten (3) elektrisch leitende Flächen umfasst, und
-- wobei das Motorelement (5) über wenigstens eine der elektrisch leitenden Flächen mit der elektronischen Leiterplatte (6) verbunden ist, **dadurch gekennzeichnet, dass** der Leuchtkasten (3) über ein Lötelement (7) elektrisch leitend mit der elektronischen Leiterplatte (6) verbunden ist, und dass das Motorelement (5) über ein anderes Lötelement (8) elektrisch leitend mit dem Leuchtkasten (3) verbunden ist.

2. Armaturenbrett (1) nach Anspruch 1, **dadurch gekennzeichnet, dass** das Armaturenbrett (1) außerdem eine weitere Zeigeranzeigevorrichtung (2') und ein weiteres Motorelement (5') umfasst, wobei das weitere Motorelement (5') direkt an der elektronischen Leiterplatte (6) befestigt ist.

3. Verfahren zum Zusammenbau eines Armaturenbretts für Kraftfahrzeuge, wobei das Armaturenbrett umfasst:
-- einen Leuchtkasten (3),
-- eine Zeigeranzeigevorrichtung (2) und
-- eine Leiterplatte (6),
wobei die Zeigeranzeigevorrichtung (2) von einem Motorelement (5) um eine Drehachse (4) drehend angetrieben wird,
-- wobei das Motorelement (5) an dem Leuchtkasten (3) unabhängig von einer Befestigung an der elektronischen Leiterplatte (6) befestigt ist,
-- wobei der Leuchtkasten (3) elektrisch leitende Flächen umfasst, und
-- wobei das Motorelement (5) über wenigstens eine der elektrisch leitenden Flächen mit der elektronischen Leiterplatte (6) verbunden ist, wobei der Leuchtkasten (3) über ein Lötelement (7) elektrisch leitend mit der elektronischen Leiterplatte (6) verbunden ist, und wobei das Motorelement (5) über ein anderes Lötelement (8) elektrisch leitend mit dem Leuchtkasten (3) verbunden ist,
**dadurch gekennzeichnet, dass** das Verfahren zum Zusammenbau einen Schritt umfasst, in welchem die Zeigeranzeigevorrichtung (2) an dem Leuchtkasten (3) befestigt wird, und einen Schritt, in welchem der Leuchtkasten (3) an der elektronischen Leiterplatte (6) befestigt wird.

## Claims

1. Dashboard (1) for motor vehicles, comprising
- a light box (3)
- a needle indicator unit (2), and
- an electronic printed circuit board (6),
the needle indicator unit (2) being driven in rotation, by a motor element (5), about an axis of rotation (4),
- the motor element (5) being attached to the light box (3) independently of an attachment to the electronic printed circuit board (6),
- the light box (3) comprising electrically conductive surfaces, and
- the motor element (5) being linked, via at least one of the electrically conductive surfaces, to the electronic printed circuit board (6),
**characterized in that** the light box (3) is linked electrically conductively to the electronic printed circuit board (6) via a brazing element (7) and
that the motor element (5) is linked electrically conductively to the light box (3) via another brazing element (8).

2. Dashboard (1) according to Claim 1, **characterized in that** the dashboard (1) also comprises another needle indicator unit (2') and another motor element (5'), the other motor element (5') being directly attached to the electronic printed circuit board (6).

3. Method for assembling a dashboard for motor vehicles, the dashboard comprising
- a light box (3)
- a needle indicator unit (2)and
- a printed circuit board (6),
the needle indicator unit (2) being driven in rotation, by a motor element (5), about an axis of rotation (4),
- the motor element (5) being attached to the light box (3) independently of an attachment to the electronic printed circuit board (6),
- the light box (3) comprising electrically conductive surfaces, and
- the motor element (5) being linked, via at least one of the electrically conductive surfaces, to the electronic printed circuit board (6), the light box (3) being linked electrically conductively to the electronic printed circuit board (6) via a brazing element (7) and the motor element (5) being linked electrically conductively to the light box (3) via another brazing element (8), **characterized in that** the assembly method comprises a step during which the needle indicator unit (2) is attached to the light box (3) and a step during which the light box (3) is attached to the electronic printed circuit board (6).
